# FASCICULE DE BREVET EUROPEEN

(11) **EP 2 758 711 B1**
(45) Date de publication et mention de la délivrance du brevet: **24.10.2018**
(21) Numéro de dépôt: 12758535.4
(22) Date de dépôt: 09.08.2012
(51) Int. Cl.: F23C 99/00, F23C 10/24, F23C 10/00, F23C 10/10

(54) **PROCÉDÉ DE COMBUSTION EN BOUCLE CHIMIQUE AVEC ÉLIMINATION DES CENDRES ET FINES DANS LA ZONE DE RÉDUCTION ET INSTALLATION UTILISANT UN TEL PROCÉDÉ**
CHEMICAL-LOOPING-COMBUSTION MIT ENTFERNUNG VON ASCHE UND FEINSTOFFEN IM REDUKTIONSBEREICH UND ANLAGE ZUR DURCHFÜHRUNG DES VERFAHRENS
CHEMICAL LOOPING COMBUSTION METHOD WITH REMOVAL OF ASH AND FINES IN THE REDUCTION AREA, AND A FACILITY USING SUCH A METHOD

(30) Priorité: 20.09.2011 FR 1102848
(43) Date de publication de la demande: 30.07.2014
(73) Titulaire: IFP Energies nouvelles, 92500 Rueil-Malmaison (FR); Total S.A., 92400 Courbevoie (FR)
(72) Inventeur: GAUTHIER, Thierry, F-69530 Brignais (FR); HOTEIT, Ali, F-75012 Paris (FR); GUILLOU. Florent, F-69360 Ternay (FR); RIFFLART, Sébastien, F-75012 Paris (FR)
(74) Mandataire: IFP Energies nouvelles
(86) Numéro de dépôt international: PCT/FR2012/000336
(87) Numéro de publication internationale: WO 2013/041779

(56) Documents cités:
- EP-A1- 2 273 192
- EP-A2- 0 211 483
- FR-A1- 2 850 156
- FR-A1- 2 936 301
- FR-A1- 2 960 940

## Description

### Domaine de l'invention

Le domaine de l'invention est celui de la combustion en boucle chimique d'oxydoréduction de charges hydrocarbonées solides, pour produire de l'énergie, du gaz de synthèse et/ou de l'hydrogène.
Plus particulièrement, l'invention concerne l'élimination des cendres produites dans le réacteur de réduction de l'installation de combustion en boucle chimique.

### Terminologie

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Dans une installation de combustion en boucle chimique, la zone d'oxydation est celle dans laquelle la masse oxydo-réductrice est oxydée et la zone de réduction est celle dans laquelle la masse oxydo-réductrice est réduite.

### Dévolatilisation :

Au cours d'un traitement thermique, les composés organiques perdent des matières volatiles, d'abord de l'eau et du dioxyde de carbone, des hydrocarbures liquides puis gazeux, ensuite de l'oxyde de carbone et enfin de l'hydrogène. Ce processus s'appelle la dévolatilisation. La température de dévolatilisation et l'amplitude du phénomène dépendent du composé organique de départ. Ainsi, pour des charbons de rang croissant, la dévolatilisation se produit à température de plus en plus élevée.

### Lit fluidisé :

Dans la suite de la description :
- par lit fluidisé dense, on entend un lit fluidisé dans lequel la fraction de gaz ε_{g} est inférieure à 0,9, de préférence inférieure à 0,8.
- par lit fluidisé dilué, on entend un lit fluidisé dans lequel la fraction volumique des particules d'oxydes métalliques est inférieure à 10% en volume.

### Art antérieur

### Problématique des cendres

Pour effectuer la combustion en boucle chimique, on utilise des matériaux transporteurs d'oxygène, tels que les oxydes métalliques qui cèdent leur oxygène dans une zone de réduction (appelée « Réacteur Fuel ») dans les conditions opératoires appropriées. Une fois réduit, le matériau est ensuite transporté vers une zone d'oxydation (appelée « Réacteur Air ») dans laquelle il est réoxydé au contact d'un gaz oxydant (tel que par exemple l'air ou la vapeur d'eau).

Plus généralement, un procédé de combustion en boucle chimique comprend une ou plusieurs zones réactionnelles dans lesquelles on effectue la combustion d'un combustible (par exemple une charge hydrocarbonée) par mise en contact avec un solide transporteur d'oxygène qui est ensuite réoxydé dans au moins une zone d'oxydation par mise en contact avec de l'air ou de la vapeur d'eau avant d'être renvoyé vers la ou le(s) zone(s) de combustion (ou réduction). Les zones réactionnelles permettant la mise en oeuvre des réactions de combustion en boucle chimique sont généralement constituées de lits fluidisés ou de lits transportés.

La combustion en boucle chimique (CLC) des charges hydrocarbonées solides est un procédé permettant notamment la production d'énergie (vapeur, électricité...) par récupération de la chaleur dégagée par les réactions de combustion, tout en produisant des fumées riches en CO2. Il est donc possible d'envisager le captage du CO₂ après condensation des fumées et compression des fumées. Il est également possible d'envisager la production de gaz de synthèse, voire d'hydrogène, en contrôlant la combustion et en mettant en oeuvre les purifications requises en aval du procédé de combustion.

Dans les mécanismes réactionnels associés à la combustion en boucle chimique dans la zone de réduction, il est établi que le combustible solide passe par une phase de gazéification, favorisée par la présence de vapeur d'eau ou de dioxyde de carbone et la température, puis que le gaz produit par l'étape de gazéification s'oxyde au contact du matériau transporteur d'oxygène. Si le combustible solide contient des matières volatiles, alors celles-ci se dévolatilisent au moins partiellement au contact du matériau transporteur d'oxygène chaud et sont ensuite oxydées par celui-ci. Il est également possible, dans le cas où le matériau transporteur d'oxygène relargue naturellement l'oxygène en fonction des conditions opératoires, d'avoir une oxydation directe du combustible solide par l'oxygène gazeux relargué par le matériau dans le Réacteur Fuel.

La combustion en boucle chimique des charges solides nécessite des conditions opératoires sévères et contraignantes pour pouvoir réaliser les réactions de combustion. Afin de favoriser la gazéification du combustible, il est nécessaire de se placer à des températures élevées, généralement comprises entre 800 et 1100°C, préférentiellement comprises entre 850 et 1000°C. Le temps requis pour effectuer la gazéification diminue en fonction de la température et est généralement compris entre 30 secondes et 30 minutes. De ce fait, il peut être avantageux d'effectuer une gazéification partielle, de séparer des effluents le résidu combustible non gazéifié et de le recycler. Ainsi, il est possible d'atteindre des taux de conversion (par gazéification) par passe compris entre 50 et 80% dans un domaine de températures comprises entre 850°C et 1000°C avec des temps de réaction compris entre 1 minute et 10 minutes, typiquement compris entre 3 et 5 minutes. En augmentant la pression partielle en gaz oxydant (H₂0, CO₂), il est possible de réduire les temps de gazéification.

Une autre difficulté associée à la mise en oeuvre de la combustion en boucle chimique des charges solides concerne la formation de cendres. En effet, les combustibles solides ont des teneurs en matières minérales non négligeables et une fois la combustion du carbone et de l'hydrogène effectuée, des résidus solides appelés cendres se forment. Le tableau 1 rassemble les analyses de deux charbons A et B à titre d'exemple. On constate que la teneur en cendres des charbons varie selon l'origine de la charge solide, mais que cette teneur est non négligeable. Elle représente typiquement de 5 à 20% de la masse de charbon sec. Certains combustibles solides tel le pet coke contiennent des teneurs en cendres beaucoup plus faibles. Il existe également des combustibles solides plus chargés en cendres.

Ces cendres sont essentiellement constituées d'oxyde de silicium et d'aluminium, mais elles contiennent également d'autres composants, comme illustré à titre d'exemple dans le tableau 1.

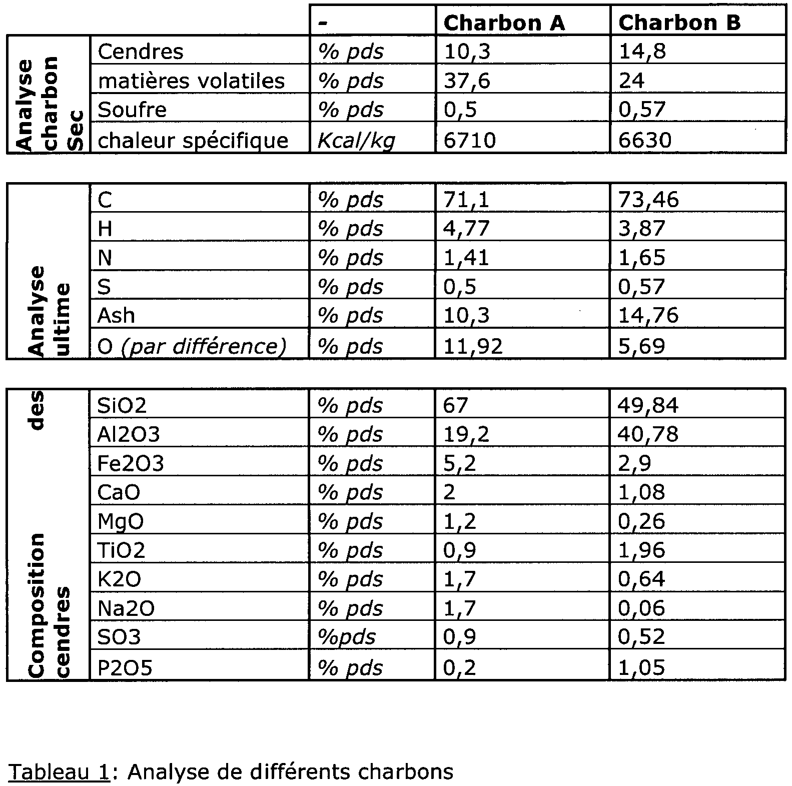

Les cendres résultant de la combustion du charbon sont constituées de fines particules résiduelles. Leur température de fusion varie en fonction de leur composition et est généralement comprise entre 1000 et 1500°C. Cependant, à des températures inférieures, par exemple entre 800 et 1000°C, il est possible d'observer un phénomène d'agglomération des particules de cendres qui deviennent collantes. Elles peuvent donc soit s'agglomérer entre elles, soit s'agglomérer avec les particules de matériau transporteur d'oxygène. Compte tenu des conditions de mise en oeuvre dans la combustion en boucle chimique, on distingue alors deux types de cendres:
∘ les cendres volantes: correspondent aux cendres qui sont transportées dans le Réacteur Fuel par les gaz de combustion ;
∘ les cendres agglomérées: correspondent aux cendres qui s'agglomèrent entre elles ou avec le matériau transporteur d'oxygène et qui sont trop lourdes pour être transportées dans le Réacteur Fuel par les gaz de combustion.

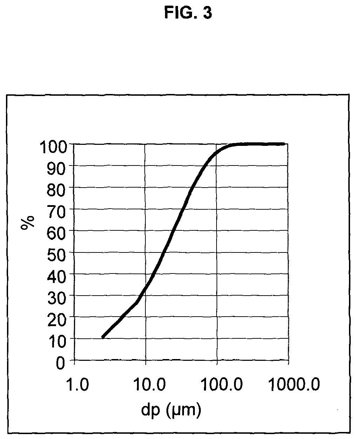

Les cendres volantes représentent en général de 50 à 99% des cendres formées, typiquement de 70 à 90%. Leur granulométrie est relativement fine avec en général au moins 25% de fines de taille inférieure à 10 microns et 90% de fines de taille inférieure à 100 microns, comme illustré sur la Figure 3 où la distribution granulométrique typique de cendres volantes est donnée à titre d'exemple. Le diamètre de Sauter moyen représentatif de la granulométrie des cendres volantes est en général compris entre 5 et 30 microns, typiquement voisin de 10 microns. La masse volumique de grain de ces cendres est en général comprise entre 2000 et 3000 kg/m3, généralement voisine de 2500 kg/m3.

La granulométrie des cendres agglomérées est plus délicate à estimer et dépend des conditions de mise en oeuvre du procédé. De manière générale, on estime que ces cendres ont une granulométrie supérieure à 100 microns et leur taille peut aller jusqu'à plusieurs millimètres.

La demande de brevet FR 2 850 156 décrit un procédé de combustion en boucle chimique pour lequel le combustible est broyé avant l'entrée dans le réacteur de réduction fonctionnant en lit fluidisé circulant. La taille réduite des particules de combustible solide permet une combustion plus complète et plus rapide et permet de produire presque 100% de cendres volantes qui sont séparées des oxydes en circulation. La séparation en aval du lit circulant est d'abord assurée par un cyclone puis par un dispositif permettant de séparer les particules d'imbrûlés des particules d'oxyde métallique. L'entraînement d'imbrûlés dans la zone d'oxydation et donc les émissions de CO₂ dans les effluents du réacteur d'oxydation est donc ainsi évité.
Le dispositif de séparation comprend un lit fluidisé par de la vapeur d'eau, qui permet de séparer les particules fines et légères telles que le résidu carboné et de réintroduire ce dernier dans le réacteur, tandis que les particules plus denses et plus grosses d'oxydes sont transférées vers le réacteur d'oxydation. Ce dispositif contient deux compartiments internes.
De plus, selon FR 2 850 156, les cendres volantes sont séparées des particules d'oxydes dans un second circuit où un séparateur fonctionnant en lit fluidisé opère la séparation, les cendres volantes fluidisées étant envoyées vers un silo via un transport pneumatique et les oxydes métalliques étant extraits à la base du réacteur à lit fluidisé après décantation.
En outre, les vitesses de gaz importantes mises en oeuvre dans le réacteur de réduction opérant en lit fluidisé circulant ne permettent pas d'obtenir des temps de séjour des particules suffisants pour gazéifier la totalité du combustible solide puis pour opérer la combustion des produits de gazéification. Un recyclage important des particules d'imbrûlés, par passage par le séparateur, est donc nécessaire. Or, la séparation des imbrûlés des particules d'oxydes est délicate car elle nécessite l'apport de gaz additionnel en grande quantité, ce qui est coûteux en énergie.
De plus, du fait du temps de séjour trop court, il est difficile de réaliser une combustion totale et les fumées contiennent des quantités importantes de CO et de H₂, ce qui implique la présence d'une zone de postcombustion en aval du procédé.

Le document EP2273192A décrit un procédé et un dispositif de combustion en boucle chimique comportant une séparation des particules de transporteur d'oxygène.

Dans la thèse de N. Berguerand "Design and Operation of a 10 kWth Chemical-Looping Combustor for Solid Fuels", ISBN 978-91-7385-329-3, est décrit un dispositif qui permet d'effectuer la combustion de charbon en mettant en oeuvre une boucle chimique.
Ce dispositif est composé d'un réacteur d'oxydation mettant en oeuvre des particules métalliques, d'un cyclone permettant la séparation des particules et de l'air appauvri après oxydation, d'un lit fluidisé alimenté en oxydes métalliques oxydés par la jambe de retour située sous le cyclone, dans lequel s'effectue la réduction de l'oxyde métallique par combustion du charbon. Le charbon est alimenté dans la partie supérieure du lit fluidisé, dans la phase diluée. Dans le réacteur de réduction, la combustion du charbon s'effectue progressivement : les particules de charbon commencent par descendre et se dévolatilisent dans la phase diluée, à contre-courant des gaz de fluidisation, et dans laquelle les oxydes métalliques ne sont présents qu'en faible quantité; puis elles rentrent en contact avec les oxydes métalliques fluidisés en phase dense. Le temps de séjour important permet de gazéifier le charbon et de produire des gaz de combustion contenant des quantités importantes de monoxyde de carbone et d'hydrogène qui passent dans la phase diluée.
Dans la phase dense du réacteur, les vitesses de fluidisation sont faibles - généralement comprises entre 5 et 30 cm/s - ce qui ne permet pas l'entraînement de quantités significatives d'oxydes métalliques dans la phase diluée qui pourraient favoriser la combustion de gaz tels que CO, H₂ ou les hydrocarbures volatilisés qui sont évacués de la zone diluée. De ce fait, les quantités de CO et d'hydrocarbures (HC) dans les effluents du réacteur de réduction sont importantes et supérieures à plusieurs pourcents en volume. Le rendement de combustion n'est donc pas très bon et une zone de postcombustion est également nécessaire pour finir la combustion.
De plus, selon ce document, le réacteur de réduction est équipé d'un séparateur de particules intégré à la phase dense ce qui nécessite l'ajout de gaz additionnel pour réaliser la séparation.

Dans ce système, il n'est pas prévu de dispositif spécifique permettant la séparation et l'évacuation des cendres formées pendant la combustion des charges solides.

Pour pallier les inconvénients des deux systèmes décrits précédemment, les demandeurs ont mis au point un procédé de combustion en boucle chimique amélioré, qui permet, même à partir de particules de combustible à l'état grossier, d'obtenir une combustion totale de la charge solide en minimisant la quantité de charge solide à recycler, ce qui permet de maximiser le rendement énergétique du procédé. Ce procédé de combustion selon l'invention permet de capter au moins 90% du CO₂ émis par la combustion dans les fumées directement à la sortie du réacteur de combustion, le taux de captage étant défini par le ratio entre la quantité de CO₂ émis dans les fumées issues du réacteur de combustion sur la quantité de CO₂ émis dans le procédé de combustion en boucle chimique.

En sortie du procédé de combustion, le ratio molaire CO/CO₂ des fumées en aval des cyclones est inférieur à 0,05 et le ratio H₂/H₂O est inférieur à 0,05. Ceci est réalisé d'une part grâce à l'optimisation du contact initial entre les particules transportant l'oxygène et le combustible solide pour favoriser les réactions de gazéification du charbon, et d'autre part, par l'optimisation du contact entre les produits de gazéification et les oxydes métalliques afin de produire des effluents ayant subi une combustion totale (H₂, CO et HC < 1% vol. dans les fumées).
Par ailleurs, la séparation des particules de combustible imbrûlé des particules d'oxydes métalliques est effectuée en amont de l'étape de dépoussiérage des fumées du réacteur de réduction pour utiliser au mieux l'énergie cinétique maximale des fumées pour la séparation des deux types de particules.
Le procédé en boucle chimique comprend :
- une mise en contact des particules de charge solide en présence de particules d'oxydes métalliques dans une première zone de réaction (R1) opérant en lit fluidisé dense,
- une combustion des effluents gazeux issus de la première zone de réaction en présence de particules d'oxydes métalliques dans une seconde zone de réaction R2,
- une séparation au sein d'un mélange issu de la zone du gaz, des particules d'imbrûlés, et des particules d'oxydes métalliques dans une zone de séparation S3,
- une réoxydation des particules d'oxydes métalliques dans une zone d'oxydation avant de les renvoyer vers la zone de mise en contact (R1).

En aval de la zone de séparation des particules d'imbrûlés et des particules d'oxydes métalliques, un système de dépoussiérage comportant par exemple un ou plusieurs étages de cyclones peut être prévu pour séparer les particules entraînées dans les fumées de la zone de combustion du Réacteur Fuel. Les cendres volantes sont entraînées dans les fumées vers ce système de dépoussiérage avec les particules de combustible solide imbrûlées. Afin de maximiser le rendement énergétique de l'installation, il est nécessaire de récupérer l'essentiel des particules imbrûlées de combustible et donc d'effectuer un dépoussiérage poussé. Ce dépoussiérage permettra alors de récupérer les particules imbrûlées mais également une partie importante des cendres volantes qui seront donc recyclées vers le Réacteur Fuel.

Il est possible de positionner une enceinte comprenant un lit fluidisé sur la conduite canalisant les particules séparées pendant l'étape de dépoussiérage pour éliminer par élutriation les cendres volantes. Ce moyen ne permet cependant pas de contrôler séparément l'élutriation des cendres et l'élutriation des particules imbrûlées. En effet, dans ce cas, une bonne élimination des cendres produites se traduit consécutivement par une élimination importante de particules imbrûlées et donc une baisse du rendement énergétique ou une baisse du taux de captage de CO2.
De plus, dans le cas où des particules du matériau transporteur d'oxygène sont entraînées vers la zone de dépoussiérage, il est nécessaire de dimensionner un lit fluidisé de grandes dimensions afin de laisser un temps suffisant à la séparation par élutriation dans le lit fluidisé.

Pour pallier en outre les inconvénients liés à l'élimination simultanée des particules imbrûlées et des cendres, il est proposé une nouvelle configuration de la zone de combustion (zone de réduction ou "réacteur fuel") permettant de mettre en oeuvre :
- une mise en contact des particules de charge solide en présence de particules d'oxydes métalliques dans une première zone de réaction (R1) opérant en lit fluidisé dense,
- une combustion en phase diluée des effluents gazeux issus de la première zone de réaction en présence de particules d'oxydes métalliques dans une seconde zone de réaction R2, opérant de préférence en lit fluidisé dilué,
- une séparation des particules au sein d'un mélange issu de la zone de combustion en phase diluée R2, permettant de récupérer avec les fumées la majorité des particules d'imbrûlés, dans une zone de séparation S3,
- un dépoussiérage des fumées issues de la zone de séparation S3 dans une zone de dépoussiérage des fumées S4,
- une division du flux de particules séparées dans l'étape de dépoussiérage en deux flux, l'un recyclé vers la zone de mise en contact du réacteur de réduction opérant en phase dense, l'autre envoyé vers une zone de séparation par élutriation S5 permettant la récupération des cendres, dans une zone de division du flux D7.

### Description de l'invention

### Objets de l'invention

L'invention concerne un procédé amélioré de combustion d'une charge hydrocarbonée solide en boucle chimique mettant en oeuvre une configuration particulière de la zone de réduction avec : une première zone de réaction (R1) opérant en lit fluidisé dense ; une seconde zone de réaction R2 ; une zone de séparation rapide S3 pour la séparation des particules de charge solide imbrûlées, de cendres volantes et des particules de matériau transporteur d'oxygène au sein d'un mélange issu de la zone R2 ; un dépoussiérage des fumées S4 ; une zone de division du flux D7 de particules, une partie des particules étant directement recyclée vers la première zone de réaction (R1), l'autre envoyée vers une zone de séparation par élutriation S5 pour récupérer les cendres par une conduite (18) et recycler les particules denses par une conduite (20) vers la première zone de réaction (R1).

L'invention concerne également une installation de combustion en boucle chimique permettant de mettre en oeuvre ledit procédé.

### Résumé de l'invention

L'invention concerne un procédé de combustion d'une charge hydrocarbonée de particules solides en boucle chimique dans laquelle circule un matériau transporteur d'oxygène sous forme de particules, ledit procédé comprenant au moins:
- une mise en contact des particules de charge solide avec les particules de matériau transporteur d'oxygène dans une première zone de réaction R1 opérant en lit fluidisé dense ;
- une combustion des effluents gazeux issus de la première zone de réaction R1 en présence de particules de matériau transporteur d'oxygène dans une seconde zone de réaction R2 ;
- une séparation des particules de charge solide imbrûlées, de cendres volantes et des particules de matériau transporteur d'oxygène au sein d'un mélange issu de la zone R2 dans une zone de séparation rapide S3 pour transporter avec les fumées de combustion (13) la majeure partie des particules de charge solide imbrûlées et les cendres volantes et envoyer la majeure partie des particules de matériau transporteur d'oxygène vers une zone d'oxydation R0 ;
- un dépoussiérage des fumées (13) issues de la zone de séparation rapide S3 dans une zone de dépoussiérage des fumées S4 pour évacuer un flux de gaz dépoussiérés (14) et un flux de particules (15) comprenant des cendres et des particules denses formées majoritairement de particules de transporteur d'oxygène et de particules de charge solide imbrûlée ;
- une division du flux de particules (15) séparées dans l'étape de dépoussiérage S4 en deux flux dans une zone de division du flux D7, l'un étant recyclé vers la première zone de réaction R1 opérant en lit fluidisé dense, l'autre envoyé vers une zone de séparation par élutriation S5 ;
- une séparation par élutriation dans ladite zone S5 pour récupérer les cendres et recycler les particules denses vers la première zone de réaction R1.

Dans un mode de réalisation, le procédé comprend également :
- une sédimentation des cendres de foyer agglomérées dans le bas de la première zone de réaction R1, dans une zone de fluidisation S6 située sous la première zone de réaction R1,
- une extraction d'un flux de particules (24) comprenant au moins 10 % en masse de cendres de foyer agglomérées.

De préférence, on fluidise la zone S6 par un gaz avec une vitesse du gaz de fluidisation dans la section de passage la plus grande de la zone S6 qui n'excède pas 3 fois la vitesse minimum de fluidisation du matériau transporteur d'oxygène. L'extraction des cendres agglomérées de la zone de fluidisation S6 est avantageusement effectuée au moyen d'une vis refroidie.

La charge solide peut être choisie parmi le charbon, le coke, le pet-coke, la biomasse, les sables bitumineux et les déchets ménagers.

De préférence, le matériau porteur d'oxygène est un solide pulvérulent avec une taille de particules telle que la distribution granulométrique est à 90% comprise entre 150 et 300 microns .

De manière préférée, le gaz de fluidisation introduit dans la zone de séparation par élutriation S5 est composé au moins en partie des fumées produites par la combustion de la charge solide.

De manière très préférée, le gaz de fluidisation introduit dans la zone de séparation par élutriation S5 est composé en totalité par les fumées produites par la combustion de la charge solide.

De manière avantageuse, le flux directement recyclé vers la première zone de réaction R1 opérant en lit fluidisé dense représente au moins 50% du flux arrivant dans la zone de division du flux D7. De manière très avantageuse le flux directement recyclé vers la première zone de réaction R1 opérant en lit fluidisé dense représente au moins 80% du flux arrivant dans la zone de division du flux D7.
La concentration en cendres volantes dans le mélange de particules circulant dans la zone de combustion est de manière préférée inférieure à 5% poids, de manière très préférée inférieure à 1% poids.
L'invention concerne également une installation pour réaliser la combustion d'une charge hydrocarbonée solide dans une boucle chimique d'oxydo-réduction selon le procédé décrit ci-dessus, ladite installation comprenant au moins:
- une zone d'oxydation R0,
- une première zone de réaction R1 comprenant une alimentation en charge solide (10), une alimentation en gaz de fluidisation (11) et une alimentation en particules de transporteur d'oxygène (8) issues de la zone d'oxydation R0,
- une deuxième zone de réaction R2 recevant un effluent gazeux de combustion contenant des particules provenant de la première zone de réaction R1,
- une zone de séparation rapide S3 des particules solides, recevant un effluent gazeux de combustion de la deuxième zone de réaction R2 contenant des cendres, des particules de transporteur d'oxygène et des particules de charge solide imbrûlée et comprenant une conduite de sortie (9) pour évacuer la plus grande partie des particules de matériau porteur d'oxygène vers la zone d'oxydation R0,
- une zone de dépoussiérage des fumées S4 recevant par son admission (13) les particules les plus légères entraînées par les gaz de combustion issus de la zone de séparation rapide S3,
- une zone de division du flux D7 recevant par son admission (15) un flux de particules séparées des fumées dans la zone de dépoussiérage des fumées S4, ledit flux comprenant des cendres et des particules denses formées majoritairement de particules de transporteur d'oxygène et de particules de charge solide imbrûlée,
- une zone de séparation par élutriation S5 recevant par son admission (17) une partie minoritaire du flux de particules divisé dans la zone de division du flux D7 et comprenant une conduite (19) permettant l'introduction d'un gaz de fluidisation et une conduite (18) d'évacuation des particules légères comprenant essentiellement des cendres volantes et des fines de matériau porteur d'oxygène,
- une conduite (16) issue de la zone de division du flux D7 pour recycler directement une partie majoritaire du flux de particules divisé dans la zone de division du flux D7 vers la première zone de réaction R1,
- une conduite (20) issue de la zone de séparation par élutriation S5 pour recycler les particules denses séparées par élutriation vers la première zone de réaction R1.

De préférence, la section de passage de la deuxième zone de réaction R2 est inférieure à la section de passage de la première zone réactionnelle R1.

Dans un mode de réalisation, l'installation comprend une zone de sédimentation des cendres agglomérées de foyer située sous la première zone de réaction R1 comprenant :
- une conduite d'alimentation en cendres agglomérées (21),
- une zone de fluidisation S6,
- une ou plusieurs conduites (22) permettant l'introduction d'un gaz de fluidisation,
- une conduite (23) de sortie des particules de porteur d'oxygène pour les recycler vers la première zone de réaction R1,
- des moyens d'extraction d'un flux de particules (24) comprenant au moins 10 % en masse de cendres de foyer agglomérées.

La zone de fluidisation S6 est de préférence une zone tronconique de demi-angle par rapport à la verticale inférieur ou égal à 15°.

### Description détaillée de l'invention

Le procédé de combustion en boucle chimique selon l'invention comprend une zone de réduction permettant :
- une mise en contact des particules de charge solide en présence de particules d'oxydes métalliques dans une première zone de réaction opérant en lit fluidisé dense,
- une combustion en phase diluée des effluents gazeux issus de la première zone de réaction en présence de particules de transporteur d'oxygène (par exemple de particules d'oxydes métalliques) dans une seconde zone de réaction,
- une séparation des particules au sein d'un mélange issu de la zone de combustion en phase diluée, permettant de récupérer avec les fumées la majorité des particules d'imbrûlés,
- un dépoussiérage des fumées issues de la zone de séparation,
- une division du flux de particules séparées dans l'étape de dépoussiérage en deux flux, l'un recyclé vers la zone de mise en contact du Réacteur Fuel opérant en phase dense, l'autre envoyée vers une zone de séparation par élutriation permettant la récupération des cendres.

Le flux directement recyclé vers la première zone de réaction en lit fluidisé dense, sans passer par l'étape de séparation, représente avantageusement une partie majoritaire du flux récupéré pendant l'étape de dépoussiérage, c'est-à-dire au moins 50% préférentiellement au moins 80%. Dans ces conditions, une majorité du charbon imbrûlé est recyclé dans le réacteur de réduction ("réacteur fuel"). Une partie des cendres volantes est également recyclée vers le réacteur de réduction, mais leur concentration dans le flux de particules circulant reste limitée. En optimisant le fonctionnement de la zone de réduction, il est possible d'obtenir une concentration en cendres volantes inférieure à 5% par rapport au débit de matériau transporteur d'oxygène circulant dans la zone de réduction, et préférentiellement inférieure à 1%.

Le flux envoyé vers la zone de séparation par élutriation des cendres représente avantageusement une partie minoritaire du flux récupéré pendant l'étape de dépoussiérage, c'est-à-dire moins de 50%, préférentiellement moins de 20% du flux sortant de la zone de réduction. La zone de séparation des cendres est par exemple constituée d'un lit fluidisé dont la vitesse de fluidisation est soigneusement choisie pour permettre sélectivement l'élimination des fines particules et particulièrement les cendres avec les gaz de fluidisation. Inévitablement, des particules de charbon imbrûlées et les fines particules de matériau transporteur d'oxygène sont entraînées avec les cendres de cette zone de séparation. Les particules les plus lourdes, c'est à dire les grosses particules de charbon imbrûlé et l'essentiel des particules de matériau transporteur d'oxygène restent dans le lit fluidisé et sont ensuite recyclées vers le réacteur fuel.

Le fonctionnement de l'installation est optimal lorsqu'il n'y a pas accumulation de cendres dans le réacteur fuel. Dans ces conditions, le débit de cendres séparées et entraînées avec les gaz de fluidisation dans la zone de séparation par élutriation correspond au débit de cendres volantes généré par la combustion du charbon en boucle chimique dans le Réacteur Fuel diminué du débit de cendres évacué dans les fumées de combustion ou dans les effluents du réacteur air. En augmentant la circulation d'oxydes vers l'élutriateur, on augmente la quantité de cendres évacuées à l'élutriateur et on limite la concentration en cendres circulant dans le réacteur fuel. De ce fait, on limite ainsi les risques d'agglomération entre les cendres et l'oxyde métallique pendant la combustion.

Par ailleurs, dans le cas où les particules transporteur d'oxygène subissent une dégradation mécanique (attrition) conduisant à la création de fines, il est possible d'ajuster les conditions de fonctionnement de la zone de séparation pour éliminer non seulement les cendres volantes de combustion, mais également les fines particules de matériau transporteur d'oxygène ayant subi une attrition. Dans ces nouvelles conditions, le fonctionnement de l'installation est optimal lorsque le débit de particules séparées et entraînées avec les gaz de fluidisation dans la zone de séparation correspond au moins au débit de cendres volantes généré par la combustion du charbon en boucle chimique dans le Réacteur Fuel et au débit de particules d'oxyde métalliques ayant subi l'attrition, diminué du débit de particules évacuées dans les fumées de combustion ou dans les effluents du réacteur air. Cela permet alors d'éviter l'accumulation de cendres et de fines particules de matériau transporteur d'oxygène dans l'installation.

Un autre objet de la présente invention consiste à compléter le dispositif décrit ci-dessus pour disposer d'un système d'évacuation des cendres agglomérées, en intégrant un système de sédimentation des cendres agglomérées dans la partie basse de la première zone de réaction opérant en lit fluidisé en phase dense. Ce dispositif permet ainsi d'évacuer la totalité des cendres agglomérées qui se forment dans la zone de réduction (réacteur fuel). Dans cette configuration, les cendres agglomérées sont évacuées de la zone de réduction dans un flux concentré dans lequel la concentration massique en cendres agglomérées est d'au moins 10%, préférentiellement d'au moins 50%.

### Description des figures

L'invention est illustrée par les figures 1, 2 et 3, qui ne présentent pas de caractère limitatif.
La figure 1 décrit le principe général de l'invention, comprenant une zone de réduction dans son mode de réalisation préféré (avec sédimentation des cendres agglomérées).
La figure 2 décrit une mise en oeuvre particulière des zones de réaction R1, R2 et de la zone de séparation S3.
La figure 3 montre un exemple de distribution granulométrique représentative des cendres volantes, dans laquelle on représente le pourcentage en poids cumulé en fonction du diamètre de particules (dp en microns).

### Figure 1 :

La zone de réduction (réacteur fuel) est constituée principalement de 3 zones :
- une première zone R1 de mise en contact des particules de charge solide en présence de particules d'oxydes métalliques opérant en lit fluidisé dense,
- une zone de combustion (ou deuxième zone de réaction) R2 des effluents gazeux issus de la première zone de réaction en présence des particules d'oxyde métallique et de combustible solide issues de la zone R1, opérant de préférence en lit fluidisé dilué,
- une zone de séparation rapide (S3) au sein d'un mélange issu de la zone de combustion R2 permettant la séparation du gaz, des particules de combustible solide imbrûlé, et des particules d'oxydes métalliques

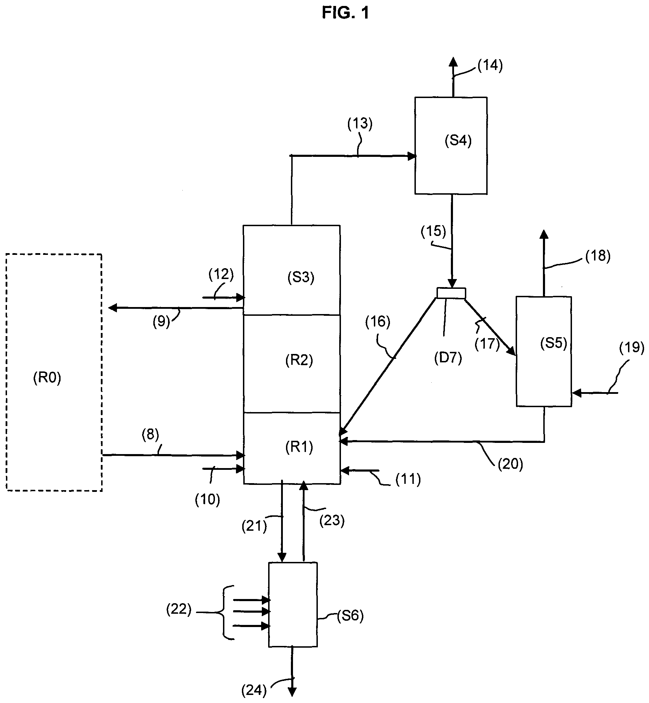

L'installation comprend en outre une zone de dépoussiérage des fumées S4, une zone de séparation par élutriation S5, une zone de sédimentation des cendres agglomérées S6 et une zone de division du flux D7.
A titre de simplification, la zone d'oxydation de la boucle chimique est représentée schématiquement par la zone en traits pointillés (R0) sur la figure 1.

Le matériau transporteur d'oxygène revenant de la zone d'oxydation R0 (non représentée ici) est introduit préférentiellement dans la zone de mise en contact en lit fluidisé dense R1 du réacteur de réduction par une conduite (8). Les particules les plus lourdes sortant de la zone de séparation rapide (S3) par une conduite (9) alimentent la zone d'oxydation (R0) (réacteur air). Le combustible solide est introduit dans la zone de mise en contact R1 par une ou plusieurs conduites d'alimentation en combustible (10). La zone de mise en contact R1 est fluidisée au moyen d'une alimentation en gaz de fluidisation (11), généralement un gaz oxydant tel que la vapeur d'eau ou le CO₂, introduits seuls ou en mélange.
Dans cette première zone fluidisée en phase dense R1, le combustible solide exposé à la température en présence d'un gaz oxydant subit une dévolatilisation des matières volatiles et une gazéification partielle. La combustion en boucle chimique des gaz formés commence dans cette zone. Le temps de séjour des particules dans cette première zone est en général compris entre 0,25 et 20 minutes, de préférence entre 2 et 10 minutes. La vitesse superficielle du gaz est généralement comprise entre 0,3 et 3 m/s aux conditions de réaction en sortie de la première zone de réaction R1.
Dans cette zone, la concentration en oxydes métalliques est au moins égale à 10% en volume et la température est généralement comprise entre 800 et 1000°C, de préférence supérieure à 900°C.

Les gaz de dévolatilisation, de gazéification et de combustion transportent les particules dans la deuxième zone de réaction R2, préférentiellement opérée en régime fluidisé dilué de transport, dans laquelle on effectue majoritairement les réactions de combustion des gaz de dévolatilisation et de gazéification résiduels. Dans cette zone, le temps de séjour moyen des gaz est généralement compris entre 1 et 20 secondes, le temps moyen de séjour des solides variant entre 2 secondes et 1 minute. La vitesse du gaz dans cette zone varie préférentiellement entre 3 et 30 m/s, préférentiellement entre 5 et 15 m/s et le flux de solides transporteurs d'oxygène varie entre 25 et 500 kg/s/m², et est préférentiellement compris entre 60 et 300 kg/s/m² pour favoriser un bon contact entre les gaz et les particules d'oxyde métallique. Dans ces conditions, on cherche à obtenir une concentration volumique en particules inférieure à 10%, préférentiellement inférieure à 5%.

Le mélange gaz particules issu de la deuxième zone de réaction R2 est ensuite introduit dans la zone de séparation (S3), dans laquelle est opérée une séparation rapide des particules les plus lourdes (essentiellement les particules de matériau transporteur d'oxygène) des particules les plus légères. Les particules les plus lourdes sortent de la zone de séparation (S3) par la conduite d'évacuation (9) et sont évacuées vers la zone réactionnelle d'oxydation R0 (réacteur air). Afin de favoriser la séparation des particules denses des particules légères dans la zone de séparation S3, une conduite d'alimentation en gaz additionnel externe (12) peut être introduite dans l'enceinte S3 pour fluidiser les particules denses dans la partie inférieure de l'enceinte autour du conduit de sortie de la deuxième zone de réaction R2.
Les particules les plus légères, constituées de l'essentiel des particules de combustible imbrûlé, des cendres volantes et des particules les plus légères de matériau transporteur d'oxygène sont entraînées avec les gaz de combustion contenant essentiellement du CO₂ et de la vapeur d'eau et sortent du réacteur fuel par une conduite d'évacuation (13). De préférence, la vitesse superficielle du gaz dans la phase diluée de la zone S3, résultant de l'écoulement des fumées de combustion et de l'ajout éventuel d'un gaz externe, correspond à une valeur comprise entre 30 et 300% de la vitesse terminale de chute moyenne des particules de porteur d'oxygène, de préférence comprise entre 50 et 150% de la vitesse terminale de chute moyenne des particules de porteur d'oxygène.
La conduite (9) permet d'évacuer les particules les plus denses du milieu, c'est à dire la majorité des particules d'oxyde métallique, réduites après contact avec le charbon dans les zones R1 et R2 vers le réacteur d'oxydation (Réacteur Air, schématiquement représenté par la zone en traits pointillés (R0)) ainsi que de faibles quantités des cendres volantes et le combustible imbrûlé qui n'auraient pas été séparés dans la zone S3.

Les particules légères sortant avec les gaz de combustion de la zone de réduction par la conduite d'évacuation (13) sont ensuite dirigées vers une zone de dépoussiérage S4 constituée d'un ou deux étages de séparation. La séparation s'effectue par exemple dans des cyclones, éléments technologiques bien connus de l'homme du métier. Ce dépoussiérage permet de récupérer au moins 99% des particules entraînées dans les fumées de combustion en sortie du réacteur fuel, préférentiellement au moins 99,5% des particules. Les gaz dépoussiérés sortent de la zone de dépoussiérage S4 par une conduite d'évacuation (14) et sont dirigés vers d'éventuels post-traitements en aval de la zone réactionnelle, tels que : des zones de récupération de chaleur permettant d'abaisser la température des fumées au voisinage de leur point de rosée tout en produisant par échange thermique de la vapeur, une zone d'abattage de polluants (SOx, NOx, etc), une zone de dépoussiérage ultime permettant d'abaisser la teneur en particules dans les fumées à une concentration suffisante pour permettre la compression du CO2, une zone de condensation de la vapeur d'eau, et une zone de compression des fumées contenant majoritairement du CO2 après condensation de l'eau de combustion.

Les particules séparées des fumées sont évacuées de la zone de combustion par une conduite d'évacuation (15) et dirigées -au moins pour les particules issues du premier étage de séparation dans le cas où plusieurs étages sont mis en oeuvre- vers une zone de division de flux D7, constituée par exemple d'un lit fluidisé muni d'une conduite d'entrée de particules (15) et de deux conduites de sortie de particules positionnées préférentiellement dans la phase dense du lit fluidisé (16) et (17), ou de tout autre moyen connu de l'homme du métier, tel que par exemple un double siphon. Ces deux flux (16) et (17) comprennent des compositions de particules similaires.
Le flux de particules (16) constitue de préférence une partie majoritaire, à savoir au moins 50%, préférentiellement au moins 80% du flux de particules transporté dans la conduite (13), et est directement recyclé dans la première zone de réaction R1.
Le flux de particules (17), constituant de préférence une partie minoritaire du flux initial, est dirigé vers une zone de séparation par élutriation S5, constituée par exemple d'un lit fluidisé duquel les particules légères sortent par une conduite d'évacuation (18), entraînées avec le gaz de fluidisation, qui est introduit par une conduite d'alimentation (19). Les particules denses, c'est à dire les grosses particules de charbon imbrûlé et l'essentiel des particules de matériau transporteur d'oxygène, restent dans la phase dense du lit fluidisé et sont ensuite recyclées vers la première zone de réaction R1 par la conduite (20). Dans le lit fluidisé constituant la zone de séparation par élutriation S5, la vitesse est ajustée pour permettre l'élimination d'un débit de cendres volantes correspondant au débit de cendres générées par la combustion par entraînement. Le diamètre de l'enceinte S5 permettant d'éliminer les cendres est ajusté en fonction de la quantité de cendres prévues. En effet, l'entraînement des particules à partir d'un lit fluidisé dépend de la concentration en particules entraînables dans le lit fluidisé et de la section en fût vide de l'élutriateur. La vitesse du gaz est également ajustée en fonction des impératifs de séparation. La vitesse du gaz joue également sur la quantité de matériau entraînable, mais affecte les propriétés des matériaux entraînés. Plus la vitesse est importante, et plus il est possible d'entraîner des particules plus lourdes. De manière générale, la vitesse du gaz est comprise entre 0,3 et 1,5 m/s, préférentiellement dans le domaine 0,4 à 1m/s pour atteindre des flux de particules entraînées variant entre 0,01 et 5 kg/s/m², préférentiellement comprises entre 0,05 et 0,5 kg/s/m². Plus la vitesse est importante, plus faible est la concentration en cendres dans le flux résiduel (20) recyclé au Réacteur Fuel.

La zone de séparation par élutriation S5 est fluidisée avec un gaz choisi avec soin en fonction des contraintes du procédé. Il est possible d'effectuer l'élutriation avec un gaz vecteur composé d'air. Dans ces conditions, le gaz de fluidisation réoxyde au moins partiellement les particules du matériau transporteur d'oxygène et les particules de combustible solide imbrûlé. Il est alors possible de disposer dans ces conditions de moyens permettant d'extraire de la chaleur dans cette zone pour refroidir le lit fluidisé et/ou ses effluents gazeux. Dans ces conditions, les fumées (18) résultant de la zone de séparation par élutriation ne sont pas mélangées aux fumées du réacteur de réduction issues de la conduite d'évacuation (14) mais peuvent par exemple être mélangées aux effluents gazeux du Réacteur Air ou traitées séparément.
Il est également possible d'utiliser un gaz tel que le CO2 pour effectuer la séparation par élutriation dans le lit fluidisé. Dans ces conditions, les effluents de l'élutriateur sortant par la conduite (18) peuvent être mélangés avec les fumées du Réacteur Fuel sortant par la conduite d'évacuation (14), après un post-traitement permettant l'élimination des particules de charbon, tel que par exemple une zone de post-combustion des particules imbrûlées de charbon.
D'autres gaz tels que la vapeur d'eau sont également envisageables pour effectuer la séparation par élutriation.

De manière préférentielle, l'écoulement de particules entre le diviseur de flux D7 et la première zone de réaction R1, entre le diviseur D7 et le séparateur élutriateur S5, et entre le séparateur élutriateur S5 et la zone R1 du réacteur de réduction est contrôlé par l'utilisation de vannes non mécaniques telles que des vannes en L.

La zone de séparation par élutriation S5 permet d'éliminer les fines particules de cendres. La séparation par élutriation permet également d'éliminer les fines particules d'oxyde métallique générées par attrition dans le procédé. Le choix d'une vitesse d'élutriation importante permet ainsi d'éliminer les particules d'oxyde métallique transportant l'oxygène détériorées par la circulation de particules entre le Réacteur Air (zone d'oxydation) et le Réacteur Fuel (zone de réduction).

Dans un mode de réalisation préféré, une zone fluidisée S6 permettant la sédimentation des cendres de foyer, qui ont une taille très importante par rapport aux particules de matériau transporteur d'oxygène et de combustible solide, est disposée sous la zone de mise en contact R1, pour permettre d'évacuer les cendres du foyer. Cette zone est alimentée par un mélange de particules contenant essentiellement des cendres agglomérées et de l'oxyde métallique, mais également de faibles quantités de cendres volantes et de combustible par la conduite (21). La zone de séparation S6 est fluidisée à une vitesse de fluidisation faible, correspondant à 1 à 10 fois la vitesse minimum de fluidisation des particules de matériau transporteur d'oxygène par un gaz préférentiellement oxydant tel que H20 ou CO2 seul ou en mélange, introduit par une ou plusieurs conduites d'alimentation (22). Les particules agglomérées plus denses vont avoir tendance à sédimenter au fond de la zone S6, alors que les particules les plus légères (transporteur d'oxygène non aggloméré, cendres volantes et charbon imbrûlé sont bien fluidisées et peuvent être recyclées dans la zone R1 par l'intermédiaire de la conduite (23).
A la base de la zone S6, des moyens d'extraction tels qu'une vis sans fin refroidie permettent de soutirer un flux de particules (24) contenant en masse une concentration d'au moins 10% de cendres de foyer.

### Figure 2 :

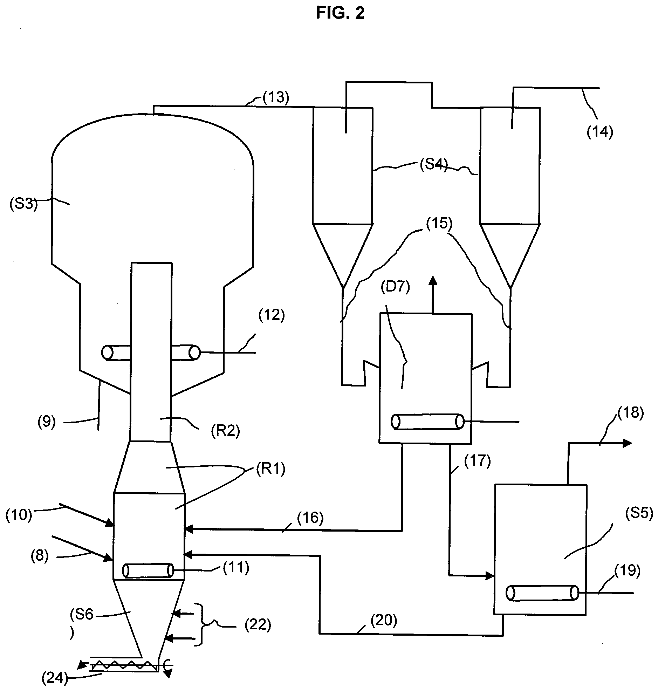

La Figure 2 décrit une mise en oeuvre particulière de la zone de réduction du procédé selon l'invention. A titre de simplification, la zone d'oxydation de la boucle chimique n'est pas représentée sur la figure 2.
Sur la figure 2, la zone de réduction en trois zones (R1,R2,S3) est constituée d'un lit fluidisé dense R1 surmonté d'un cône d'accélération débouchant dans un tube de transport R2 permettant un écoulement en lit fluidisé dilué, le tube de transport R2 débouchant dans la zone de séparation S3 constituée d'une enceinte de grand diamètre dans laquelle la vitesse du gaz est ajustée pour permettre la séparation des particules de transporteur d'oxygène évacuées principalement en (9) des particules plus légères (combustible imbrûlé, cendres volantes et fines du matériau transporteur d'oxygène, évacuées en (13) dans la ligne de fumées. Les moyens de dépoussiérage dans la ligne de fumées (13) sont constitués de deux étages de cyclones en série S4. Les particules séparées par ces cyclones S4 sont injectées dans un lit fluidisé D7, opéré à une vitesse de fluidisation proche de la vitesse minimum de fluidisation pour éviter tout entraînement de particules avec le gaz de fluidisation, et permettant de diviser en deux le flux des particules séparées grâce à deux conduites (16) et (17) connectées à la phase dense du lit fluidisé D7. Le flux (16) est recyclé vers le réacteur de réduction et le flux (17) est dirigé vers le lit fluidisé S5. Dans le lit fluidisé (5), la vitesse imposée au gaz de fluidisation est importante et favorise l'entraînement des particules légères (cendres volantes et éventuellement combustible imbrûlé et fines de matériau transporteur d'oxygène) qui sortent avec le gaz de fluidisation dans la conduite (18). Le reste des particules est recyclé dans la première zone de mise en contact du réacteur de réduction R1.
Dans le prolongement vers le bas de la zone R1 de combustion en phase dense, une section tronconique S6 permet la sédimentation des cendres agglomérées qui vont progressivement migrer vers le bas de la section tronconique S6. La vitesse de fluidisation imposée le long de la section tronconique S6 est préférentiellement comprise entre 1 et 3 fois la vitesse minimum de fluidisation des particules de matériau transporteur d'oxygène pour favoriser la sédimentation des cendres agglomérées, qui sont beaucoup plus grosses que le matériau transporteur d'oxygène. Dans ces conditions, les particules d'oxydes non agglomérées, les cendres volantes et le combustible peuvent aller et venir entre la zone S6 et la zone R1. Le demi angle de cône avec la verticale est préférentiellement compris entre 5 et 30°, préférentiellement voisin de 15°. A la base du cône, une vis sans fin refroidie permet l'évacuation des cendres agglomérées en mélange avec une fraction de particules de matériau transporteur d'oxygène. On dispose dans la section tronconique d'aérations étagées en partant du bas du cône. A la base du cône, au premier niveau, l'aération injectée correspond par exemple à un débit générant 1 à 3 fois la vitesse minimum de fluidisation du matériau transporteur d'oxygène au second niveau situé plus haut dans le cône. Au second niveau, le débit injecté correspond au complément d'aération nécessaire générant 1 à 3 fois la vitesse minimum de fluidisation du matériau transporteur d'oxygène au troisième niveau situé plus haut dans le cône et ainsi de suite jusqu'à atteindre la base du Réacteur Fuel. En fonction de la hauteur du cône, on ajuste le nombre d'aérations de façon à disposer d'injections tous les mètres environ. Le gaz d'aération injecté est préférentiellement du CO₂ ou de la vapeur d'eau.

Le fonctionnement du procédé décrit est favorisé par la mise en oeuvre de matériau transporteur d'oxygène ayant une composition granulométrique et une masse volumique de grain favorisant la séparation avec les particules de cendres volantes, de combustible imbrûlé et de cendres agglomérées. Il est ainsi préférable d'avoir une composition granulométrique du transporteur d'oxygène telle que 90% des particules en poids ont une granulométrie comprise entre 100 et 500 microns, préférentiellement 90% entre 150 et 300 microns, et de manière encore plus préférentielle 95% compris entre 150 et 300 microns.

Par ailleurs, la masse volumique de grain des particules de transporteur d'oxygène est préférentiellement supérieure à 2500 kg/m³, de manière préférée supérieure à 3400kg/m³, de manière encore plus préférentielle supérieure à 4000 kg/m³.

Figure 3 : La figure 3 représente la distribution granulométrique des cendres volantes générées par la combustion de charbon en boucle chimique selon l'exemple ci-dessous.

### Exemple

L'exemple suivant permet d'illustrer l'invention en s'appuyant sur la simulation du fonctionnement d'une installation de 3MWth.

Cette installation est alimentée par un débit de charbon de 420 kg/h caractérisé par une teneur en cendres de 13,9% poids et une teneur en matières volatiles de 29,9%.

Le charbon est alimenté dans le réacteur fuel avec une granulométrie caractérisée par le fait que moins de 2% du charbon a une taille de particules supérieure à 200 microns.

La composition granulométrique du matériau transporteur d'oxygène est telle que plus de 90% de la granulométrie est comprise entre 150 et 300 microns, et la masse volumique du matériau transporteur d'oxygène est proche de 4000 kg/m³.

La distribution granulométrique des cendres volantes est donnée, à titre d'exemple, sur la figure 3.

Le réacteur fuel est composé de 3 zones :
- une première zone de réaction R1 par mise en contact des particules de charge solide en présence de particules d'oxydes métalliques en lit fluidisé dense,
- une zone de combustion en phase diluée (seconde zone de réaction R2) des effluents gazeux issus de la première zone de réaction en présence de particules d'oxydes métalliques,
- une zone de séparation des particules S3 au sein d'un mélange issu de la zone de combustion en phase diluée, permettant de récupérer avec les fumées la majorité des particules d'imbrûlés,

La combustion s'effectue dans le réacteur fuel par contact avec un oxyde métallique transférant 1,9% poids d'oxygène, avec un débit provenant de l'air réacteur estimé à 35500 kg/h environ.

Le flux (13) entraîné en sortie de la zone de séparation rapide S3 est composé des fines particules d'oxyde métallique, des cendres volantes et des particules de charbon imbrûlé. La composition de ce flux est la suivante
oxyde métallique :6000 kg/h
cendres : 340kg/h
charbon imbrûlé = 100,5 kg/h

Après dépoussiérage, les particules séparées sortant par la conduite (15) et entraînées vers le lit fluidisé diviseur D7 ont la composition suivante :
oxyde métallique :5990 kg/h
cendres : 333 kg/h
charbon imbrûlé = 100 kg/h

Le lit fluidisé D7 sépare le flux (15) en deux flux (16) et (17) de composition identique contenant respectivement 85% et 15% du flux (15). Le lit fluidisé D7 est un lit fluidisé de 60 cm de diamètre opéré à la vitesse de fluidisation de 8 cm/s. La composition du flux (22) alimentant le lit fluidisé élutriateur est la suivante :
oxyde métallique :899 kg/h
cendres : 50 kg/h
charbon imbrûlé = 15 kg/h

La composition du flux (16) renvoyé au réacteur fuel est la suivante :
oxyde métallique :5091 kg/h
cendres : 283 kg/h
charbon imbrûlé = 85 kg/h

L'élutriateur permet d'éliminer environ 80% des cendres du flux (17). L'élutriateur est ici un lit fluidisé de 0,8m de diamètre opérant à une vitesse de fluidisation de 0,75m/s. L'élutriateur est ici fluidisé par du CO2, par une conduite (19). La composition du flux entraîné à l'élutriateur par la conduite (18) est la suivante.
oxyde métallique :29 kg/h
cendres : 40 kg/h
charbon imbrûlé = 12 kg/h

La composition du flux sortant par la conduite (20) et permettant le recyclage des particules non entraînées à l'élutriateur vers le réacteur fuel est la suivante:
oxyde métallique : 870 kg/h
cendres : 10 kg/h
charbon imbrûlé = 3 kg/h

Le bas de la zone de mise en contact R1 du fuel réacteur, de diamètre 917 mm est prolongé en sa partie inférieure (dessous) par un cône de demi-angle 15° avec la verticale de hauteur 1711mm dans lequel on a disposé 2 niveaux d'aération, l'un à la base du cône permettant d'introduire 7kg/h de vapeur, l'autre situé à mi hauteur permettant d'introduire 20 kg/h de vapeur. Dans ces conditions, la vitesse moyenne de fluidisation de l'oxyde métallique est voisine de 2 à 3 fois la vitesse minimum de fluidisation des oxydes métalliques et permet de soutirer environ 9 kg/h de cendres agglomérées de diamètre moyen compris entre 0,5 et 5 mm à la base du cône par des moyens d'extraction (24) comprenant une vis d'extraction refroidie, en mélange avec 30 kg/h d'oxyde métallique.

Le Flux (9) évacuant les particules non séparées en S3 vers le réacteur Air (R0) a la composition suivante :
oxyde métallique :35441 kg/h
cendres : 2 kg/h
charbon imbrûlé = 8 kg/h.

Les cendres et le charbon évacués vers le réacteur air sont éliminés au cours de la réoxydation de l'oxyde métallique. Le charbon brûle dans le réacteur air au contact de l'air et les cendres sont éliminées par passage dans un cyclone. L'appoint d'oxyde métallique destiné à compenser les pertes d'oxyde au cours de l'élutriation est effectué dans le réacteur air par intermittence.

L'exemple ci dessus illustre bien le fonctionnement d'un procédé en boucle chimique de combustion du charbon permettant une élimination des cendres en continu.
Ainsi, la combustion du charbon génère un débit de cendres de 58 kg/h. Celles ci sont éliminées du procédé dans les flux suivants:
- cendres volantes entraînées vers le réacteur air (zone d'oxydation R0) par le flux (9) après sédimentation en mélange avec le matériau transporteur d'oxygène dans la zone de séparation rapide S3 = 2 kg/h
- cendres agglomérées du foyer extraites par la vis d'extraction (24) = 9 kg/h
- cendres volantes entraînées en aval des cyclones S4 avec les fumées du réacteur Fuel dans le flux (14) =7 kg/h
- cendres volantes entraînées dans les effluents gazeux sortant par la conduite (18) de l'élutriateur S5 = 40 kg/h

Grâce à cette élimination en continu, l'accumulation de cendres dans l'installation reste limitée (circulation de cendres dans le réacteur fuel de 350 kg/h par rapport à une circulation d'oxyde de 35500 kg/h, soit une concentration d'environ 1%).
De plus, le charbon brûle essentiellement dans le réacteur fuel au contact de l'oxyde métallique ce qui permet d'envisager des taux de captage supérieurs à 90%. En effet, 420 kg/h de charbon sont introduits dans le réacteur fuel.

Le charbon imbrûlé entraîné vers le réacteur air (R0) par la conduite (9) représente un débit de 8 kg/h.
Le charbon imbrûlé entraîné à l'élutriateur S5 par la conduite (18) représente un débit de 12 kg/h.
Le charbon imbrûlé entraîné en sortie de zone de dépoussiérage des fumées S4 par la conduite (14) représente un débit de 0,5 kg/h.

## Revendications

1. Procédé de combustion d'une charge hydrocarbonée de particules solides en boucle chimique dans laquelle circule un matériau transporteur d'oxygène sous forme de particules, ledit procédé comprenant au moins:
- une mise en contact des particules de charge solide avec les particules de matériau transporteur d'oxygène dans une première zone de réaction R1 opérant en lit fluidisé dense ;
- une combustion des effluents gazeux issus de la première zone de réaction R1 en présence de particules de matériau transporteur d'oxygène dans une seconde zone de réaction R2 ;
- une séparation des particules de charge solide imbrûlées, de cendres volantes et des particules de matériau transporteur d'oxygène au sein d'un mélange issu de la zone R2 dans une zone de séparation rapide S3 pour transporter avec les fumées de combustion (13) la majeure partie des particules de charge solide imbrûlées et les cendres volantes et envoyer la majeure partie des particules de matériau transporteur d'oxygène vers une zone d'oxydation R0 ;
- un dépoussiérage des fumées (13) issues de la zone de séparation rapide S3 dans une zone de dépoussiérage des fumées S4 pour évacuer un flux de gaz dépoussiérés (14) et un flux de particules (15) comprenant des cendres et des particules denses formées majoritairement de particules de transporteur d'oxygène et de particules de charge solide imbrûlée ;
- une division du flux de particules (15) séparées dans l'étape de dépoussiérage S4 en deux flux dans une zone de division du flux D7, l'un étant recyclé vers la première zone de réaction R1 opérant en lit fluidisé dense, l'autre envoyé vers une zone de séparation par élutriation S5 ;
- une séparation par élutriation dans ladite zone S5 pour récupérer les cendres et recycler les particules denses vers la première zone de réaction R1.

2. Procédé selon la revendication 1 comprenant :
- une sédimentation des cendres de foyer agglomérées dans le bas de la première zone de réaction R1, dans une zone de fluidisation S6 située sous la première zone de réaction R1,
- une extraction d'un flux de particules (24) comprenant au moins 10 % en masse de cendres de foyer agglomérées.

3. Procédé selon la revendication 2 dans lequel on fluidise la zone S6 par un gaz avec une vitesse du gaz de fluidisation dans la section de passage la plus grande de la zone S6 qui n'excède pas 3 fois la vitesse minimum de fluidisation du matériau transporteur d'oxygène.

4. Procédé selon la revendication 3 dans lequel l'extraction des cendres agglomérées de la zone de fluidisation S6 est effectuée au moyen d'une vis refroidie.

5. Procédé selon l'une des revendications 1 à 4, selon lequel la charge solide est choisie parmi le charbon, le coke, le pet-coke, la biomasse, les sables bitumineux et les déchets ménagers.

6. Procédé selon l'une des revendications précédentes dans lequel le matériau porteur d'oxygène est un solide pulvérulent avec une taille de particules telle que la distribution granulométrique est à 90% comprise entre 150 et 300 microns .

7. Procédé selon l'une des revendications précédentes dans lequel le gaz de fluidisation introduit dans la zone de séparation par élutriation S5 est composé au moins en partie des fumées produites par la combustion de la charge solide.

8. Procédé selon la revendication 7 dans lequel le gaz de fluidisation introduit dans la zone de séparation par élutriation S5 est composé en totalité par les fumées produites par la combustion de la charge solide.

9. Procédé selon l'une des revendications précédentes dans lequel le flux directement recyclé vers la première zone de réaction R1 opérant en lit fluidisé dense représente au moins 50% du flux arrivant dans la zone de division du flux D7.

10. Procédé selon la revendication 9 dans lequel le flux directement recyclé vers la première zone de réaction R1 opérant en lit fluidisé dense représente au moins 80% du flux arrivant dans la zone de division du flux D7.

11. Procédé selon l'une des revendications précédentes dans lequel la concentration en cendres volantes dans le mélange de particules circulant dans la zone de combustion est inférieure à 5% poids.

12. Procédé selon la revendication 11 dans lequel la concentration en cendres volantes dans le mélange de particules circulant dans la zone de combustion est inférieure à 1% poids.

13. Installation pour réaliser la combustion d'une charge hydrocarbonée solide dans une boucle chimique d'oxydo-réduction selon le procédé selon l'une des revendications 1 à 12, ladite installation comprenant au moins:
- une zone d'oxydation R0,
- une première zone de réaction R1 comprenant une alimentation en charge solide (10), une alimentation en gaz de fluidisation (11) et une alimentation en particules de transporteur d'oxygène (8) issues de la zone d'oxydation R0,
- une deuxième zone de réaction R2 recevant un effluent gazeux de combustion contenant des particules provenant de la première zone de réaction R1,
- une zone de séparation rapide S3 des particules solides, recevant un effluent gazeux de combustion de la deuxième zone de réaction R2 contenant des cendres, des particules de transporteur d'oxygène et des particules de charge solide imbrûlée et comprenant une conduite de sortie (9) pour évacuer la plus grande partie des particules de matériau porteur d'oxygène vers la zone d'oxydation R0,
- une zone de dépoussiérage des fumées S4 recevant par son admission (13) les particules les plus légères entraînées par les gaz de combustion issus de la zone de séparation rapide S3,
- une zone de division du flux D7 recevant par son admission (15) un flux de particules séparées des fumées dans la zone de dépoussiérage des fumées S4, ledit flux comprenant des cendres et des particules denses formées majoritairement de particules de transporteur d'oxygène et de particules de charge solide imbrûlée,
- une zone de séparation par élutriation S5 recevant par son admission (17) une partie minoritaire du flux de particules divisé dans la zone de division du flux D7 et comprenant une conduite (19) permettant l'introduction d'un gaz de fluidisation et une conduite (18) d'évacuation des particules légères comprenant essentiellement des cendres volantes et des fines de matériau porteur d'oxygène ,
- une conduite (16) issue de la zone de division du flux D7 pour recycler directement une partie majoritaire du flux de particules divisé dans la zone de division du flux D7 vers la première zone de réaction R1,
- une conduite (20) issue de la zone de séparation par élutriation S5 pour recycler les particules denses séparées par élutriation vers la première zone de réaction R1.

14. Installation selon la revendication 13 dans laquelle la section de passage de la deuxième zone de réaction R2 est inférieure à la section de passage de la première zone réactionnelle R1.

15. Installation selon l'une des revendications 13 ou 14 comprenant une zone de sédimentation des cendres agglomérées de foyer située sous la première zone de réaction R1 comprenant :
- une conduite d'alimentation en cendres agglomérées (21),
- une zone de fluidisation S6,
- une ou plusieurs conduites (22) permettant l'introduction d'un gaz de fluidisation,
- une conduite (23) de sortie des particules de porteur d'oxygène pour les recycler vers la première zone de réaction R1,
- des moyens d'extraction d'un flux de particules (24) comprenant au moins 10 % en masse de cendres de foyer agglomérées.

16. Installation selon la revendication 15 dans laquelle la zone de fluidisation S6 est une zone tronconique de demi-angle par rapport à la verticale inférieur ou égal à 15°.

## Patentansprüche

1. Chemical-Looping-Combustion-Verfahren zum Verbrennen eines KohlenwasserstoffEinsatzmaterials aus festen Partikeln, in dem ein sauerstofftragendes Material in Form von Partikeln zirkuliert, wobei das Verfahren mindestens umfasst:
- Inkontaktbringen der Partikel des festen Einsatzmaterials mit den Partikeln des sauerstofftragenden Materials in einer ersten Reaktionszone R1, die im dichten Fluidbett arbeitet;
- Verbrennen der gasförmigen Abströme aus der ersten Reaktionszone R1 in Gegenwart von Partikeln des sauerstofftragenden Materials in einer zweiten Reaktionszone R2;
- Trennen von unverbrannten Partikeln des festen Einsatzmaterials, der Flugasche und Partikeln des sauerstofftragenden Materials innerhalb einer aus der Zone R2 kommenden Mischung in einer Zone zur schnellen Trennung S3, um mit den Verbrennungsrauchgasen (13) den Großteil der unverbrannten Partikel des festen Einsatzmaterials und der Flugasche zu befördern und den Großteil der Partikel des sauerstofftragenden Materials in eine Oxidationszone R0 zu schicken;
- Entstauben der aus der Zone zur schnellen Trennung S3 kommenden Rauchgase (13) in einer Zone zum Entstauben von Rauchgasen S4, um einen Strom von entstaubtem Gas (14) und einen Strom von Partikeln (15), umfassend Asche und dichte Partikel, die hauptsächlich aus Partikeln des Sauerstoffsträgers und unverbrannten Partikeln des Einsatzmaterials gebildet sind, abzuleiten;
- Teilen des Stroms von Partikeln (15), die in dem Schritt zum Entstauben S4 getrennt wurden, in zwei Ströme in einer Zone zum Teilen des Stroms D7, wobei der eine in die erste Reaktionszone R1, die im dichten Fluidbett arbeitet, zurückgeführt wird, und der andere in eine Zone zur Trennung durch Elutriation S5 geschickt wird;
- Trennen durch Elutriation in der Zone S5, um die Asche zurückzugewinnen und die dichten Partikel in die erste Reaktionszone R1 zurückzuführen.

2. Verfahren nach Anspruch 1, umfassend:
- Sedimentieren der im Boden der ersten Reaktionszone R1 agglomerierten Ofenasche in einer Fluidisierungszone S6, die sich unter der ersten Reaktionszone R1 befindet,
- Extrahieren eines Stroms von Partikeln (24), umfassend mindestens 10 Masse-% agglomerierte Ofenasche.

3. Verfahren nach Anspruch 2, wobei die Zone S6 durch ein Gas mit einer Geschwindigkeit des Fluidisierungsgases in dem größten Durchgangsabschnitt der Zone S6 fluidisiert wird, die das Dreifache der Mindestfluidisierungsgeschwindigkeit des sauerstofftragenden Materials nicht übersteigt.

4. Verfahren nach Anspruch 3, wobei die Extraktion der agglomerierten Asche in der Fluidisierungszone S6 unter Verwendung einer gekühlten Schnecke durchgeführt wird.

5. Verfahren nach einem der Ansprüche 1 bis 4, wobei das feste Einsatzmaterial ausgewählt ist aus Kohle, Koks, Petrolkoks, Biomasse, bituminösen Sanden und Haushaltsabfällen.

6. Verfahren nach einem der vorhergehenden Ansprüche, wobei das sauerstofftragende Material ein pulverförmiger Feststoff mit einer solchen Partikelgröße ist, dass die Korngrößenverteilung bei 90 % im Bereich zwischen 150 und 300 Mikron liegt.

7. Verfahren nach einem der vorhergehenden Ansprüche, wobei das Fluidisierungsgas, das in die Zone zur Trennung durch Elutriation S5 eingeführt wird, mindestens teilweise aus Rauchgasen besteht, die durch die Verbrennung des festen Einsatzmaterials erzeugt werden.

8. Verfahren nach Anspruch 7, wobei das Fluidisierungsgas, das in die Zone zur Trennung durch Elutriation S5 eingeführt wird, vollständig aus den Rauchgasen besteht, die durch die Verbrennung des festen Einsatzmaterials erzeugt werden.

9. Verfahren nach einem der vorhergehenden Ansprüche, wobei der Strom, der direkt in die erste Reaktionszone R1, die im dichten Fluidbett arbeitet, zurückgeführt wird, mindestens 50 % des Stroms ausmacht, der in der Zone zum Teilen des Stroms D7 ankommt.

10. Verfahren nach Anspruch 9, wobei der Strom, der direkt in die erste Reaktionszone R1, die im dichten Fluidbett arbeitet, zurückgeführt wird, mindestens 80 % des Stroms ausmacht, der in der Zone zum Teilen des Stroms D7 ankommt.

11. Verfahren nach einem der vorhergehenden Ansprüche, wobei die Flugaschekonzentration in der Partikelmischung, die in der Verbrennungszone zirkuliert, kleiner 5 Gew.-% ist.

12. Verfahren nach Anspruch 11, wobei die Flugaschekonzentration in der Partikelmischung, die in der Verbrennungszone zirkuliert, kleiner 1 Gew.-% ist.

13. Anlage zum Durchführen der Verbrennung eines festen KohlenwasserstoffEinsatzmaterials in einer Chemical-Loop-Oxidation-Reduktion gemäß dem Verfahren nach einem der Ansprüche 1 bis 12, wobei die Anlage mindestens umfasst:
- eine Oxidationszone R0,
- eine erste Reaktionszone R1, umfassend eine Einspeisung für das feste Einsatzmaterial (10), eine Einspeisung für das Fluidisierungsgas (11) und eine Einspeisung für die aus der Oxidationszone R0 kommenden sauerstofftragenden Partikel (8),
- eine zweite Reaktionszone R2, die einen gasförmigen Verbrennungsabstrom, enthaltend Partikel, die aus der ersten Reaktionszone R1 stammen, aufnimmt
- eine Zone zur schnellen Trennung S3 der festen Partikel, die einen gasförmigen Verbrennungsabstrom der zweiten Reaktionszone 2, enthaltend Asche, sauerstofftragende Partikel und unverbrannte Partikel des festen Einsatzmaterials, aufnimmt und eine Auslassleitung (9) umfasst, um den Großteil der Partikel des sauerstofftragenden Materials in die Oxidationszone R0 abzuleiten,
- eine Zone zum Entstauben der Rauchgase S4, die über ihre Zuleitung (13) die leichtesten Partikel aufnimmt, die von den aus der Zone zum schnellen Trennen S3 stammenden Verbrennungsgasen mitgeführt werden,
- eine Zone zum Teilen des Stroms D7, die über ihre Zuleitung (15) einen Strom von Partikeln der Rauchgase aufnimmt, die in der Zone zum Entstauben der Rauchgase S4 getrennt wurden, wobei der Strom Asche und dichte Partikel umfasst, die hauptsächlich aus sauerstofftragenden Partikeln und unverbrannten Partikeln des festen Einsatzmaterials bestehen,
- eine Zone zum Trennen durch Elutriation S5, die über ihre Zuleitung (17) einen kleineren Teil des Stroms der Partikel aufnimmt, die in der Zone zum Teilen des Stroms D7 geteilt wurden und eine Leitung (19) umfasst, die die Einführung eines Fluidisierungsgases ermöglicht und eine Leitung (18) zum Ableiten der leichten Partikel, die im Wesentlichen Flugasche und Feinstoffe aus sauerstofftragendem Material umfassen,
- eine Leitung (16), die aus der Zone zum Teilen des Stroms D7 kommt, um einen Großteil des Stroms der Partikel, die in der Zone zum Teilen des Stroms D7 geteilt wurden, in die erste Reaktionszone R1 direkt zurückzuführen,
- eine Leitung (20), die aus der Zone zum Trennen durch Elutriation S5 kommt, um die dichten Partikel, die durch Elutriation getrennt wurden, in die erste Reaktionszone R1 zurückzuführen.

14. Anlage nach Anspruch 13, wobei der Durchgangsabschnitt der zweiten Reaktionszone R2 kleiner ist als der Durchgangsabschnitt der ersten Reaktionszone R1.

15. Anlage nach einem der Ansprüche 13 oder 14, umfassend eine Zone zum Sedimentieren der agglomierten Ofenasche, die sich unter der ersten Reaktionszone R1 befindet, umfassend:
- eine Einspeiseleitung für agglomerierte Asche (21),
- eine Fluidisierungszone S6,
- eine oder mehrere Leitungen (22), die das Einführen eines Fluidisierungsgases ermöglichen,
- eine Auslassleitung (23) der sauerstofftragenden Partikel, um sie in die erste Reaktionszone R1 zurückzuführen,
- Einrichtungen zum Extrahieren eines Partikelstroms (24), umfassend mindestens 10 Masse-% agglomerierte Ofenasche.

16. Anlage nach Anspruch 15, wobei die Fluidisierungszone S6 eine kegelstumpfförmige Zone mit einem halben Winkel in Bezug auf die Vertikale kleiner oder gleich 15° ist.

## Claims

1. A process for the chemical looping combustion of a feed of solid hydrocarbon particles in which an oxygen transporter material circulates in the form of particles, said process comprising at least:
• bringing particles of solid feed into contact with particles of oxygen transporter material in a first reaction zone R1 operating in dense fluidized bed mode;
• combustion of the gaseous effluents from the first reaction zone R1 in the presence of particles of oxygen transporter material in a second reaction zone R2;
• separating the unburned particles of solid feed from fly ash and from particles of oxygen transporter material in a mixture from the zone R2 in a rapid separation zone S3 in order to transport the major portion of the unburned solid feed and the fly ash with the combustion fumes (13) and sending the major portion of the particles of oxygen transporter material to an oxidation zone R0;
• dedusting the fumes (13) from the rapid separation zone S3 in a fume dedusting zone S4 in order to evacuate a stream (14) of dedusted gas and a stream of particles (15) comprising ash and dense particles primarily formed of particles of oxygen transporter and particles of unburned solid feed;
• dividing the stream of particles (15) separated in the dedusting step S4 into two streams in a stream division zone D7, one being recycled to the first reaction zone R1 operating in dense fluidized bed mode, the other being sent to an elutriation separation zone S5;
• separating by elutriation in said zone S5 in order to recover the ash and recycle the dense particles to the first reaction zone R1.

2. A process according to claim 1, comprising:
• sedimentation of the agglomerated boiler ash in the bottom of the first reaction zone R1, in a fluidization zone S6 located below the first reaction zone R1;
• extracting a stream of particles (24) comprising at least 10% by weight of agglomerated boiler ash.

3. A process according to claim 2, in which the zone S6 is fluidized with a gas having a highest velocity of the fluidization gas in the cross section of flow of zone S6 which does not exceed three times the minimum fluidization velocity of the oxygen transporter material.

4. A process according to claim 3, in which agglomerated ash is extracted from the fluidization zone S6 by means of a chilled worm.

5. A process according to one of claims 1 to 4, in which the solid feed is selected from coal, coke, pet coke, biomass, bituminous sand and domestic waste.

6. A process according to one of the preceding claims, in which the oxygen carrier material is a powdered solid with a particle size such that 90% of the granulometric distribution is in the range 150 to 300 microns.

7. A process according to one of the preceding claims, in which the fluidization gas introduced into the elutriation separation zone S5 is at least partially composed of fumes produced by combustion of the solid feed.

8. A process according to claim 7, in which the fluidization gas introduced into the elutriation separation zone S5 is entirely composed of fumes produced by combustion of the solid feed.

9. A process according to one of the preceding claims, in which the stream which is directly recycled to the first reaction zone R1 operating in dense fluidized bed mode represents at least 50% of the stream coming into the stream division zone D7.

10. A process according to claim 9, in which the stream recycled directly to the first reaction zone R1 operating in dense fluidized bed mode represents at least 80% of the stream arriving at the stream division zone D7.

11. A process according to one of the preceding claims, in which the concentration of fly ash in the mixture of particles moving in the combustion zone is less than 5% by weight.

12. A process according to claim 11, in which the concentration of fly ash in the mixture of particles moving in the combustion zone is less than 1% by weight.

13. A facility for carrying out combustion of a solid hydrocarbon feed in a chemical redox loop in accordance with the process as claimed in one of claims 1 to 12, said facility comprising at least:
• an oxidation zone R0;
• a first reaction zone R1 comprising a supply of solid feed (10), a supply of fluidization gas (11) and a supply of oxygen transporter particles (8) derived from the oxidation zone R0;
• a second reaction zone R2 receiving a gaseous combustion effluent containing particles from the first reaction zone R1;
• a zone for rapid separation of solid particles S3, receiving a gaseous combustion effluent from the second reaction zone R2 containing ash, particles of oxygen transporter and particles of unburned solid feed and comprising an outlet line (9) to evacuate the majority of the particles of oxygen transporter material to the oxidation zone R0;
• a zone for dedusting fumes S4 receiving, via its inlet (13), the lightest particles entrained by the combustion gases from the rapid separation zone S3;
• a stream division zone D7 receiving, via its inlet (15), a stream of particles separated from fumes in the fume dedusting zone S4, said stream comprising ash and dense particles primarily formed from oxygen transporter particles and unburned solid feed particles;
• a zone for separation by elutriation S5 receiving, via its inlet (17), a minor portion of the stream of particles divided in the stream division zone D7 and comprising a line (19) that can be used to introduce a fluidization gas and a line (18) for evacuating light particles essentially comprising fly ash and oxygen transporter material fines;
• a line (16) issuing from the stream division zone D7 to directly recycle a major portion of the stream of particles divided in the stream division zone D7 to the first reaction zone R1;
• a line (20) from the elutriation separation zone S5 to recycle the dense particles separated by elutriation to the first reaction zone R1.

14. A facility according to claim 13, in which the cross section of flow of the second reaction zone R2 is less than the cross section of flow of the first reaction zone R1.

15. A facility according to claim 13 or claim 14, comprising a zone for sedimentation of agglomerated boiler ash located below the first reaction zone R1, comprising:
• a line for supplying agglomerated ash (21);
• a fluidization zone S6;
• one or more lines (22) which can be used to introduce a fluidization gas;
• an outlet line (23) for oxygen carrier particles in order to recycle them to the first reaction zone R1;
• means for extracting a stream of particles (24) comprising at least 10% by weight of agglomerated boiler ash.

16. A facility according to claim 15, in which the fluidization zone S6 is a tapered zone with a half-angle with respect to the vertical of 15° or less.
